# EUROPEAN PATENT SPECIFICATION

(11) **EP 2 644 572 B1**
(45) Date of publication and mention of the grant of the patent: **23.03.2016**
(21) Application number: 13160939.8
(22) Date of filing: 25.03.2013
(51) Int. Cl.: C02F 1/44, C02F 1/42, B01D 61/02, B01J 20/34, B01D 15/36, F22D 11/00

(54) **Steam plant and method of operating the same**
Dampfanlage und Verfahren zum Betrieb davon
Centrale à vapeur et son procédé de fonctionnement

(30) Priority: 30.03.2012 GB 201205631
(43) Date of publication of application: 02.10.2013
(73) Proprietor: Spirax-Sarco Limited, Cheltenham, Gloucestershire GL53 8ER (GB)
(72) Inventor: Griffin, Mike, Cheltenham, Gloucestershire GL51 9NQ (GB)
(74) Representative: McCartney, Jonathan William

(56) References cited:
- WO-A1-2011/140613
- CN-U- 201 873 580
- JP-A- S5 518 258
- JP-A- 2002 336 859
- JP-A- 2008 089 190
- JP-A- 2008 157 580
- JP-A- 2008 224 148
- US-A- 3 639 231
- US-A1- 2002 153 319
- US-A1- 2010 282 675
- US-A1- 2011 005 751
- US-A1- 2011 132 839

## Description

The invention relates to a steam plant, a method of operating the same, and a method of upgrading an existing steam plant.

In an industrial and heating process utilising steam, steam is generated in a boiler and is transferred through pipework at high temperature and pressure to various industrial processes where the energy in the steam is utilised.

It is important to control the quality of the raw water fed to the boiler in order to prevent undesirable effects from occurring within the steam plant. These undesirable effects include corrosion of the metal components of the plant, such as pipework and valves, and the reduction of heat transfer rates which can lead to overheating and the loss of mechanical strength of components.

Water is referred to as being either "hard" or "soft"'. Hard water contains scale-forming impurities while soft water contains little or none. Hardness is caused by the presence of the mineral salts of calcium and magnesium and it is these minerals that encourage the formation of scale. If hard water is supplied to the boiler then scaling of the heat transfer surfaces will occur and this will reduce the heat transfer and efficiency of the boiler. Further, if the water supplied to the boiler contains dissolved gases, particularly oxygen, the corrosion of the boiler surfaces, pipework and other surfaces is likely to occur. If the pH value of the water is too low, the acidic solution will attack metal surfaces, and if the pH value is too high and the water is alkaline, other problems such as foaming may occur.

It is also desirable to prevent boiler water from being carried over from the boiler to the steam system as this can result in the contamination of control valves and heat transfer surfaces, and the restriction of steam trap orifices. Carryover is typically caused by either "priming" or "foaming". Priming is the ejection of boiler water into the steam take-off and is generally due to either operating the boiler with too high a water level, operating the boiler below its design pressure, or excessive steam demand. Foaming is the formation of foam in the space between the water surface and the steam take-off and is primarily due to a high-level of impurities in the boiler water.

As the boiler generates steam, any impurities which are in the boiler water and which do not boil off with the steam will concentrate in the boiler water. As the amount of total dissolved solids (TDS) become more and more concentrated, the steam bubbles tend to become more stable, failing to burst as they reach the water surface of the boiler. Eventually, a substantial part of the steam space in the boiler becomes filled with bubbles and foam is carried over into the main part of the steam plant. It is therefore desirable to carefully control the amount of total dissolved solids (TDS) in the boiler water. The TDS value of the boiler water is monitored using a sensor and water known as blowdown water is discharged from the boiler to a blowdown vessel in order to maintain the TDS value within acceptable limits. Conventional boilers may be operated with the TDS in the range of 2000-3500 ppm. The blowdown water is mixed with colder water in the blowdown vessel and is then discharged to a drain.

Table 1 below shows the technical and commonly used names of some typical impurities in water, their chemical symbols, and their effects.

**Table 1**

| **Name** | **Symbol** | **Common name** | **Effect** |
|---|---|---|---|
| Calcium carbonate | CaCO₃ | Chalk, limestone | Soft scale |
| Calcium bicarbonate | Ca(HCO₃)₂ | | Soft scale + CO₂ |
| Calcium sulphate | CaSO₄ | Gypsum, plaster of paris | Hard scale |
| Calcium chloride | CaCl₂ | | Corrosion |
| Magnesium carbonate | MgCO₃ | | Soft scale |
| Magnesium sulphate | MgSO₄ | Magnesite | Corrosion |
| Magnesium bicarbonate | Mg(HCO₃)₂ | Epsom salts | Scale, corrosion |
| Sodium chloride | NaCl | Common salt | Electrolysis |
| Sodium carbonate | Na₂CO₃ | Washing soda or soda | Alkalinity |
| Sodium bicarbonate | NaHCO₃ | Baking soda | Priming, foaming |
| Sodium hydroxide | NaOH | Caustic soda | Alkalinity, embrittlement |
| Sodium sulphate | Na₂SO₂ | Glauber salts | Alkalinity |
| Silicon dioxide | SiO₂ | Silica | Hard scale |

It is known to treat raw water by removing various impurities before providing it to the boiler as feedwater so as to minimise the undesirable effects described above. For example, if the water is too hard then scale forms in the boiler, and if the TDS value is too high then the blowdown rate of the boiler must be increased in order to prevent the TDS value in the boiler from becoming too high and leading to carryover.

US 2011/0005751 discloses a method for producing steam comprising the steps of: providing feedwater containing carbonate and/or sulphate ions; adding a crystallizing reagent able to react with carbonate and/or sulphate ions to the feedwater, in order to produce carbonate and/or sulphate crystals; filtering the feedwater with a ceramic membrane to produce a permeate stream; supplying the permeate stream to a boiler; and generating steam in the boiler.

The water treatment system of a steam plant typically comprises a filter unit, a softener unit and a reverse osmosis unit and raw water is passed through these units sequentially.

The filter unit is typically a carbon filter and acts to remove suspended solids from the raw water. The filter must be periodically flushed in order to clean the filter and flush away debris that has built up in the filter.

The softener unit acts to reduce the hardness of the filtered water and typically comprises two softener vessels and a brine tank. Each softener vessel is provided with a resin to which sodium ions are bonded. As the filtered water is passed over the resin, the sodium ions bonded to the resin are displaced and exchanged for the calcium and magnesium ions in water, thus reducing the hardness of the water. After a period of time, all of the sodium ions will have been displaced from the resin and replaced with calcium and magnesium ions. Therefore, the softener vessel is regenerated by flushing the resin with a strong solution of sodium chloride from the brine tank. This causes the calcium and magnesium ions bonded to the resin to be replaced with sodium ions. The softener vessel is then flushed with water so as to remove the un-bonded calcium and magnesium ions from the softener vessel. Typically, whilst one softener vessel is being used, the other is being regenerated so that water can be softened without interruption.

The reverse osmosis unit acts to reduce the TDS value of the softened water. The reverse osmosis unit comprises a semi-permeable membrane provided between two chambers. The softened water having a high TDS value is supplied to one of the chambers and pressure is applied. The applied pressure causes pure water, having a low TDS and known as permeate, to pass through the semi-permeable membrane to the other chamber. Concentrate containing a high concentration of impurities, and consequently having a high TDS value, is retained on the pressurized side of the semi-permeable membrane. The permeate is supplied to the boiler as feedwater via a feedtank, and the concentrate is discharged to a drain. The softened water supplied to the reverse osmosis unit may have a TDS value of 220 ppm and the permeate used as feedwater may have a TDS value of 23 ppm.

As should be appreciated from the above, a steam plant requires substantial volumes of water in order to operate. Specifically, raw water that is ultimately used to generate steam, cold water that can be mixed with the hot blowdown water, water for the brine tank of the softener unit, and flushing water for both the filter and the softener unit. Water is financially an expensive resource and contributes to a large proportion of the running costs of a steam plant. Further, a large proportion of this water is ultimately discharged to a drain and water authorities typically levy a charge for this. Water is a finite resource and demand on water supplies is increasing.

Therefore, from both a financial and an environmental point of view it is desirable to reduce the water consumption of a steam plant.

The invention is defined in the attached independent claims to which reference should now be made. Further, optional features are defined in the sub-claims appended thereto.

According to an aspect of the invention there is provided a steam plant, comprising: a processing unit arranged to treat raw water; a boiler arranged to generate steam; a blowdown vessel in fluid communication with the boiler so as to receive hot blowdown water from the boiler; and a reverse osmosis unit in fluid communication with the processing unit though an inflow water line, the boiler through a permeate line, and the processing unit and/or the blowdown vessel through a concentrate line; wherein in use, the reverse osmosis unit receives treated inflow water from the processing unit and generates permeate which is provided to the boiler through the permeate line and concentrate which is provided to the processing unit and/or the blowdown vessel through the concentrate line. In other aspects of the invention, the concentrate may be provided to the boiler, via a feedtank (otherwise known as a hotwell), and/or the RO inlet of the reverse osmosis unit instead of, or in addition to, the processing unit and/or the blowdown vessel.

By using concentrate from the reverse osmosis unit in the processing unit and/or the blowdown vessel, the water consumption of the steam plant may be reduced, thereby reducing the operating costs of the steam plant and reducing the environmental impact of the steam plant.

The processing unit may comprise a softener unit including at least one softener vessel and a brine tank. The concentrate may be provided to the brine tank and may be subsequently used to regenerate the at least one softener vessel. By using the concentrate to fill the brine tank, the use of raw water typically used to fill the brine tank may be reduced. The concentrate may be provided to at least one softener vessel so as to flush the softener vessel. By using the concentrate to flush the softener vessel, the use of raw water typically used to flush the softener vessel may be reduced.

The processing unit may comprise a filter, such as a carbon filter. The concentrate may be provided to the filter so as to flush the filter. By using the concentrate to flush the filter, the use of raw water typically used to flush the filter may be reduced. The concentrate is provided to the blowdown vessel where it is mixed with hot blowdown water so as to cool the blowdown water. By using the concentrate to cool the hot blowdown water, the use of raw water typically used to cool hot blowdown water may be reduced.

The steam plant may further comprise a concentrate tank arranged to receive and temporarily store concentrate from the reverse osmosis unit.

According to another aspect of the invention there is provided a method of operating a steam plant, comprising: providing raw water to a processing unit which generates treated inflow water; providing the treated inflow water to a reverse osmosis unit which generates permeate and concentrate; providing the permeate to a boiler; and providing the concentrate to the processing unit and/or a blowdown vessel.

The processing unit may comprise a softener unit including at least one softener vessel and a brine tank. The concentrate may be provided to the brine tank; and the method may further comprise: regenerating the at least one softener vessel using concentrate from the brine tank. The method may further comprise flushing the at least one softener vessel with the concentrate.

The processing unit may comprise a filter. The method may further comprise flushing the filter with the concentrate.

The method comprises providing the concentrate to the blowdown vessel and mixing with hot blowdown water so as to cool the blowdown water.

The method may further comprise temporarily storing the concentrate in a concentrate storage tank, and subsequently providing the concentrate to the processing unit and/or blowdown vessel.

According to another aspect of the invention there is provided a method of modifying an existing steam plant comprising a processing unit arranged to treat raw water; a boiler arranged to generate steam; a blowdown vessel in fluid communication with the boiler so as to receive hot blowdown water from the boiler; and a reverse osmosis unit in fluid communication with the processing unit though an inflow water line and the boiler through a permeate line and having a concentrate output, the method comprising: fluidically connecting the concentrate output of the reverse osmosis unit with the processing unit and/or the blowdown vessel through a concentrate line, such that during use of the steam plant, concentrate can be provided to the processing unit and/or the blowdown vessel through the concentrate line.

The invention may comprise any combination of the features and/or limitations referred to herein, except combinations of such features as are mutually exclusive.

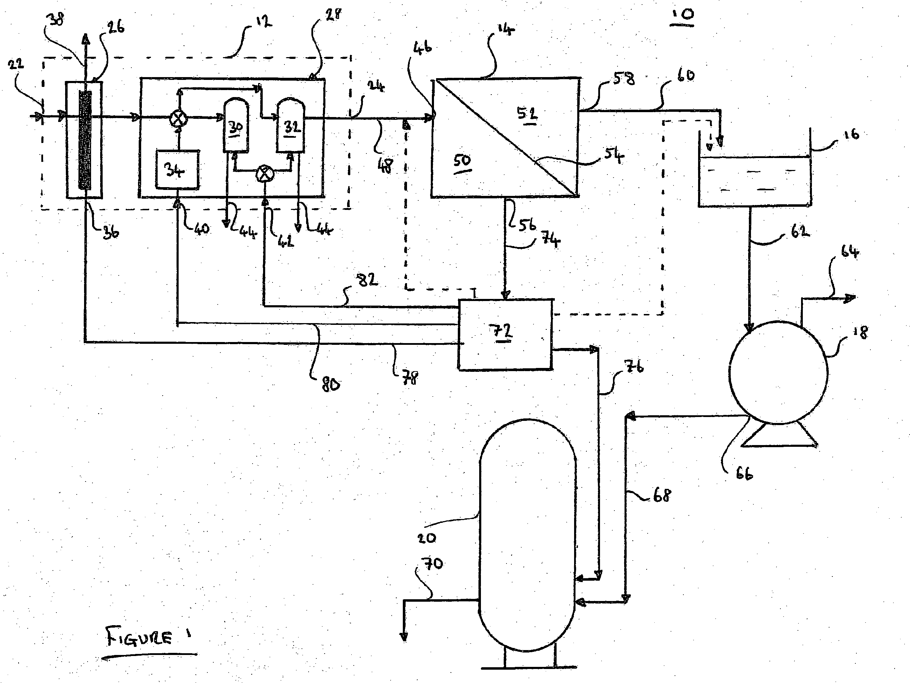

Embodiments of the present invention will now be described, by way of example, with reference to the accompanying Figure 1 which schematically shows part of a steam plant.

**Figure 1** schematically shows part of a steam plant 10 comprising a processing unit 12, a reverse osmosis unit 14, a feedtank (hotwell) 16, a boiler 18, and a blowdown vessel 20. In use, the processing unit 12 and reverse osmosis 14 treat raw water which is supplied to the boiler 18 via the feedtank 16 to generate steam. The steam generated by the boiler 18 is transferred through pipework at high temperature and pressure to various industrial processes where the energy in the steam is utilised (not shown). At periodic intervals, blowdown water is discharged from the boiler 18 to the blowdown vessel 20 where it is cooled and discharged. Although not shown in the schematic of Figure 1, various pumps, valves and sensors may be provided to control the flow of water and steam around the system.

The processing unit 12 has an inlet 22 for receiving raw water, and an outlet 24 for discharging treated water. The processing unit 12 comprises a filter 26, in the form of a carbon filter, and a softener unit 28 that are fluidically connected in series. The filter 26 is arranged to remove suspended solids from the raw water and the softener unit 28 is arranged to reduce the hardness of the water. The filter 26 is also provided with a flushing water line 36 and a drain line 38. The softener unit 28 includes first and second softener vessels 30, 32, each containing a resin to which sodium ions are bonded, and a brine tank 34 for regenerating the softener vessels 30, 32. The softener unit 28 is also provided with control valves that allow filtered water to flow through one softener vessel 30, 32 whilst the other softener vessel 30, 32 is being regenerated. This allows the softener unit 28 to be continuously used. The softener unit 28 is also provided with a brine tank fill line 40, a flushing water line 42, and drain lines 44.

Although it has been described that there is a filter 26 and a softener unit, in other embodiments only one may be present. Further, additional water treatment devices or units may be incorporated into the processing unit 12 as necessary.

The outlet 24 of the processing unit 12 is fluidically connected to the RO inlet 46 of the reverse osmosis unit 14 with an inflow water line 48. This allows raw water treated by the processing unit 12 to be supplied to the reverse osmosis unit 14. The reverse osmosis unit 14 is arranged to reduce the total dissolved solids (TDS) value of treated inflow water provided from the processing unit 12. As schematically shown in Figure 1, the reverse osmosis unit 14 comprises an inflow chamber 50 and a permeate chamber 52 separated by a semi-permeable membrane 54. The RO inlet 46 opens into the inflow chamber 50 which is further provided with a concentrate outlet 56 from which concentrate, having a high TDS value, can be discharged. The permeate chamber 52 is provided with a permeate outlet 58 from which permeate, having a low TDS value, can be discharged. In use, the inflow chamber 50 is maintained under pressure and inflow water is provided to this chamber through the RO inlet 46. Pure water, known as permeate and low in impurities, passes through the membrane 54 where it can be discharged from the permeate outlet 58, whilst concentrate, high in impurities, can be drawn from the concentrate outlet 56.

The permeate outlet 58 of the reverse osmosis unit 14 is connected to a permeate line 60 which is configured to supply the permeate generated by the reverse osmosis unit 14 to the feedtank 16. In turn, the feedtank 16 is fluidically connected to the boiler 18 by a feedwater supply line 62 so that feedwater in the feedtank 16 can be supplied to the boiler 18. The boiler 62 is configured to generate steam from the feedwater and is provided with a steam supply line 64 for delivering and transferring the steam to various processes (not shown) within the steam plant.

The boiler 18 is also provided with a blowdown outlet 66 towards the bottom of the boiler to which a blowdown line 68 is attached. The blowdown line 68 connects the boiler 18 to the blowdown vessel 20 such that hot blowdown water can be discharged from the boiler 18 to the blowdown vessel 20. The blowdown vessel 20 is further provided with a drain line 70 which allows cooled blowdown water to be discharged to a drain.

In addition to the components described above, the steam plant 10 is further provided with a concentrate storage tank 72 that is fluidically connected to the concentrate outlet 56 of the reverse osmosis unit 14 by a concentrate line 74. This allows concentrate generated by the reverse osmosis unit 14 to be fed to and stored by the concentrate tank. The concentrate storage tank 72 is connected to various other components of the steam plant 10 with various concentrate lines. Specifically, in this embodiment the concentrate storage tank 72 is connected to the blowdown vessel 20 with a line 76, the flushing line 36 of the filter 26 with a line 78, the brine tank fill line 40 of the brine tank 34 with a line 80 and the flushing line 42 of the softener unit 28 with a line 82. This allows concentrate from the reverse osmosis unit 14, temporarily stored in the concentrate storage tank 72, to be supplied to these various components.

In use, raw water is provided to the inlet 22 of the processing vessel 12 and is passed through the carbon filter 26 to remove any suspended particulate in the water. The filtered water is then passed through the softener unit 28 to reduce the hardness of the water. The softener unit 28 comprises two softener vessels 30, 32 and the filtered water is passed through one of these vessels 30, 32 whilst the other vessel is being regenerated (as will be explained below). As the filtered water is passed over the resin in the softener vessel 30, 32, the magnesium or calcium ions in the water displace and replace the sodium ions bonded to the resin. This therefore reduces the hardness of the water by replacing the magnesium and calcium ions with sodium ions. The filtered and softened water is then fed to the RO inlet 46 of the reverse osmosis unit 14 as treated inflow water through the inflow water line 48. The treated inflow water enters the inflow chamber 50 of the reverse osmosis unit 14 and is subjected to a high pressure. Permeate that is low in impurities, and which consequently has a low TDS value, passes through the membrane 54 to the permeate chamber 52, whilst concentrate high in impurities, and which consequently has a high TDS value, is retained in the inflow chamber 50. The concentrate is drawn through the concentrate outlet 56 of the reverse osmosis unit 14 at a known rate and is fed to the concentrate storage tank 72 through the concentrate line 74. The permeate, which is relatively soft and which has a relatively low TDS value, is fed to the feedtank 16 through the permeate line 60. Various chemicals are supplied to the feedwater in the feedtank 16. Boiler feedwater is fed to the boiler 18 through the feedwater supply line 62 where it is heated to generate steam. The steam is transferred to various industrial processes in the steam plant 10 through the steam supply line 64.

The impurities in the boiler water within the boiler 18 concentrate as they do not boil off and the TDS value of the boiler water therefore increases. As previously discussed, if the TDS value is too high then foam forms within the boiler which may be carried over into the remainder of the steam system. Therefore, at periodic intervals, blowdown water having a high TDS value is discharged from the boiler 18 through the blowdown outlet 66 to the blowdown vessel 20 via the blowdown water line 68. The temperature of the blowdown water is too high for it to be immediately discharged to a drain. Therefore, the hot blowdown water supplied to the blowdown vessel 20 is mixed with cooler water within the blowdown vessel 20 before it is discharged through the drain 70. In this embodiment, the concentrate generated by the reverse osmosis unit 14 and stored in the storage tank 72 is supplied to the blowdown vessel 20 through the line 76. The concentrate is at approximately ambient temperature and therefore can be used to cool the hot blowdown water. If there is insufficient concentrate available to sufficiently cool the hot blowdown water, then water from another source, such as raw water, can be used in addition. Since the concentrate is only being used to cool hot blowdown water, it does not matter that it is high in impurities.

The use of concentrate, that would ordinarily be directly discharged to a drain due to its high level of impurities, to cool hot blowdown water eliminates, or at least reduces, the amount of raw water that is required in the blowdown vessel. There is therefore a financial saving as the cost of raw water to cool the hot blowdown water is eliminated (or at least reduced), and the cost of disposing of the concentrate is also eliminated (or at least reduced).

After a period of time, the filter 26 will become blocked with the suspended solids which it has removed from the raw water. It is therefore necessary to periodically flush the filter 26 with flushing water. In this embodiment, concentrate generated by the reverse osmosis unit 14 and stored in the storage tank 72 is supplied to the filter flushing line 36 and is used to flush the filter 26 so as to remove any debris. The concentrate used to flush the filter 26 is then discharged through the drain 38. If there is insufficient concentrate available to flush the filter 26, then water from another source, such as raw water, can be used in addition. Since the concentrate is only being used to flush the filter, it does not matter that it is high in impurities.

The use of concentrate, that would ordinarily be directly discharged to a drain due to its high level of impurities, to flush the filter 26 eliminates, or at least reduces, the amount of raw water that is required for flushing. There is therefore a financial saving as the cost of raw water to flush the filter 26 is eliminated (or at least reduced), and the cost of disposing of the concentrate is also eliminated (or at least reduced).

After a period of time, all of the sodium ions bonded to the resin of the softener vessel 30, 32 being used will have been replaced with calcium and magnesium ions, and therefore the softener vessel 30, 32 must be regenerated. In order to do this, a series of valves are actuated so that the filtered water is directed to the other softener vessel 30, 32 to ensure continuous operation of the softener unit 28. The softener vessel 30, 32 is regenerated by filling the vessel 30, 32 with a strong solution of sodium chloride supplied from the brine tank 34. This causes the sodium and magnesium ions bonded to the resin to be displaced and replaced with sodium ions. In this embodiment, the concentrate generated by the reverse osmosis unit 14 and stored in the storage tank 72 is supplied to the brine tank 34 through the line 80 where it is mixed with solid sodium chloride so as to form a strong brine solution. If there is insufficient concentrate available to generate sufficient brine, then water from another source, such as raw water, can be used in addition. Since the concentrate is only being used to form brine solution, it does not matter that it is high in impurities. Once the regeneration of the resin has taken place, the softener vessel 30,32 is flushed so as to remove the magnesium and calcium ions from the vessel 30,32. In this embodiment, concentrate generated by the reverse osmosis unit 14 and stored in the storage tank 72 is supplied to the softener unit flushing line 42 and is used to flush the softener vessel 30, 32. The concentrate used to flush the softener vessel 30, 32 is then discharged through the drain 44. If there is insufficient concentrate available to flush the softener vessel 30, 32, then water from another source, such as raw water, can be used in addition. Since the concentrate is only being used to flush the softener unit 28, it does not matter that it is high in impurities.

The use of concentrate, that would ordinarily be directly discharged to a drain due to its high level of impurities, to fill the brine tank 34 and flush the softener vessel 30, 32 eliminates, or at least reduces, the amount of raw water that is required. There is therefore a financial saving as the cost of raw water to fill the brine tank 34 and flush the softener vessel 30, 32 is eliminated (or at least reduced), and the cost of disposing of the concentrate is also eliminated (or at least reduced).

As can be seen from the above, using the concentrate from the reverse osmosis unit 14 in other areas of the steam plant where water quality is not as important results in both financial and environmental benefits. Although it has been described that the concentrate is used for flushing the filter, filling the brine tank, flushing the softener vessel and cooling blowdown water, it should be appreciated that a particular steam plant may not implement all of these uses. For example, in a particular steam plant the concentrate may only be used for cooling blowdown water, or may only be used to flush the filter. Also, depending on the particular requirements, it is not essential that a concentrate storage tank is provided if the concentrate can be used "on-the-fly".

As shown in Figure 1 in dotted lines, instead of providing concentrate to the blowdown vessel 20 and/or the processing unit 12, concentrate may be supplied to the feedtank (hotwell) 16 and/or the RO inlet 46 of the reverse osmosis unit 14. However, due to the quality of the concentrate, in particular the high TDS value, any such supply must be carefully controlled.

Some of the components of the steam plant 10 described above with reference to Figure 1 may already be present in an existing steam plant 10; although configured entirely differently. Therefore, it may be possible to upgrade or modify an existing steam plant 10 to use concentrate from a reverse osmosis unit 14 in other parts of the plant 10, thereby making the steam plant 10 more efficient and environmentally friendly.

Where it has been described that a particular component is in fluid communication with another component by a particular line, it should be appreciated that this may be directly, or indirectly, and other components may be disposed in the fluid path between the two. For example, in the above described embodiment the reverse osmosis unit 14 is in fluid communication with the boiler 18 through the permeate line 60. However, a feedtank 16 is disposed in the fluid path between the two, and a further fluid line 62 from the feedtank 16 to the boiler 18 is provided.

## Claims

1. A steam plant (10), comprising:
a processing unit (12) arranged to treat raw water;
a boiler (18) arranged to generate steam; and
a blowdown vessel (20) in fluid communication with the boiler (18) so as to receive hot blowdown water from the boiler (18); and
a reverse osmosis unit (14) in fluid communication with the processing unit (12) though an inflow water line (48) to receive treated inflow water from the processing unit (12), and in fluid communication with the boiler through a permeate line (60) to provide permeate generated in the reverse osmosis unit to the boiler (18);
**characterised in that** the reverse osmosis unit is in fluid communication with the blowdown vessel (20) through a concentrate line (76) to provide concentrate generated in the reverse osmosis unit to the blowdown vessel (20) through the concentrate line (76) and thereby cool the hot blowdown water received in the blowdown vessel (20) from the boiler (18).

2. A steam plant (10) according to claim 1, wherein the reverse osmosis unit (14) is in fluid communication with the processing unit (12) through a concentrate line (78, 80, 82), and wherein in use concentrate is provided to the processing unit through the concentrate line (78, 80, 82).

3. A steam plant (10) according to claim 2, wherein the processing unit (12) comprises a softener unit (28) including at least one softener vessel (30, 32) and a brine tank (34).

4. A steam plant (10) according to claim 3, wherein in use concentrate is provided to the brine tank (34) and is subsequently used to regenerate the at least one softener vessel (30, 32).

5. A steam plant (10) according to claim 3 or 4, wherein in use concentrate is provided to at least one softener vessel (30, 32) so as to flush the softener vessel (30, 32).

6. A steam plant (10) according to any preceding claim, wherein in use concentrate provided to the blowdown vessel (20) is mixed with hot blowdown water so as to cool the blowdown water.

7. A steam plant (10) according to any preceding claim, further comprising a concentrate tank (72) arranged to receive and temporarily store concentrate from the reverse osmosis unit (14).

8. A method of operating a steam plant (10), comprising:
providing raw water to a processing unit (12) which generates treated inflow water;
providing the treated inflow water to a reverse osmosis unit (14) which generates permeate and concentrate;
providing the permeate to a boiler (18);
receiving hot blowdown water from the boiler (18) in a blowdown vessel (20); and
**characterised by further comprising:**
providing the concentrate from the reverse osmosis unit to the blowdown vessel (20) to cool the hot blowdown water received in the blowdown vessel (20) from the boiler (18).

9. A method according to claim 8 further comprising providing concentrate to the processing unit (12).

10. A method according to claim 9, wherein the processing unit (12) comprises a softener unit (28) including at least one softener vessel (30, 32) and a brine tank (34).

11. A method according to claim 10, wherein concentrate is provided to the brine tank (34); and wherein the method further comprises:
regenerating the at least one softener vessel (30, 32) using concentrate from the brine tank (34).

12. A method according to claim 10 or 11, further comprising flushing the at least one softener vessel (30, 32) with concentrate.

13. A method according to any of claims 8 to 12, further comprising mixing the concentrate provided to the blowdown vessel (20) with hot blowdown water so as to cool the blowdown water.

14. A method according to any of claims 8-13, further comprising temporarily storing the concentrate in a concentrate storage tank (72), and subsequently providing the concentrate to the processing unit (12) and/or blowdown vessel (20).

15. A method of modifying an existing steam plant comprising a processing unit (12) arranged to treat raw water; a boiler (18) arranged to generate steam; a blowdown vessel (20) in fluid communication with the boiler (18) so as to receive hot blowdown water from the boiler (18); and a reverse osmosis unit (14) in fluid communication with the processing unit though an inflow water line (48) and the boiler (18) through a permeate line (60) and having a concentrate output (56), the method **characterised by comprising:**
fluidically connecting the concentrate output (56) of the reverse osmosis unit (14) with the blowdown vessel through a concentrate line (76) for providing concentrate generated in the reverse osmosis unit to the blowdown vessel (20) through the concentrate line (76) in use of the steam plant, to thereby cool the hot blowdown water received in the blowdown vessel (20) from the boiler.

## Patentansprüche

1. Dampfanlage (10), umfassend:
eine Aufbereitungseinheit (12), die zur Behandlung von Rohwasser angeordnet ist;
einen Dampfkessel (18), der zur Dampferzeugung angeordnet ist; und
einen Abschlammbehälter (20) in Fluidverbindung mit dem Dampfkessel (18), um heißes Abschlammwasser aus dem Dampfkessel (18) aufzunehmen; und
eine Umkehrosmoseanlage (14), die über eine Wasserzulaufleitung (48) in Fluidverbindung mit der Aufbereitungseinheit (12) steht, um behandeltes Zulaufwasser aus der Aufbereitungseinheit (12) aufzunehmen, und die über eine Permeatleitung (60) in Fluidverbindung mit dem Dampfkessel steht, um Permeat, das in der Umkehrosmoseanlage erzeugt wird, an den Dampfkessel (18) bereitzustellen;
**dadurch gekennzeichnet, dass** die Umkehrosmoseanlage über eine Konzentratleitung (76) in Fluidverbindung mit dem Abschlammbehälter (20) steht, um Konzentrat, das in der Umkehrosmoseanlage erzeugt wird, an den Abschlammbehälter (20) über die Konzentratleitung (76) bereitzustellen und dadurch das heiße Abschlammwasser, das in dem Abschlammbehälter (20) aus dem Dampfkessel (18) aufgenommen wird, zu kühlen.

2. Dampfanlage (10) nach Anspruch 1, wobei die Umkehrosmoseanlage (14) über eine Konzentratleitung (78, 80, 82) in Fluidverbindung mit der Aufbereitungseinheit (12) steht und wobei das Konzentrat bei der Verwendung über die Konzentratleitung (78, 80, 82) an die Aufbereitungseinheit bereitgestellt wird.

3. Dampfanlage (10) nach Anspruch 2, wobei die Aufbereitungseinheit (12) eine Enthärtungseinheit (28) aufweist, die mindestens einen Enthärtungsbehälter (30, 32) und einen Soletank (34) aufweist.

4. Dampfanlage (10) nach Anspruch 3, wobei das Konzentrat bei der Verwendung an den Soletank (34) bereitgestellt wird und danach verwendet wird, um den mindestens einen Enthärtungsbehälter (30, 32) zu regenerieren.

5. Dampfanlage (10) nach Anspruch 3 oder 4, wobei das Konzentrat bei der Verwendung an mindestens einen Enthärtungsbehälter (30, 32) bereitgestellt wird, um den Enthärtungsbehälter (30, 32) zu spülen.

6. Dampfanlage (10) nach einem der vorhergehenden Ansprüche, wobei das an den Abschlammbehälter (20) bereitgestellte Konzentrat bei der Verwendung mit heißem Abschlammwasser gemischt wird, um das Abschlammwasser zu kühlen.

7. Dampfanlage (10) nach einem der vorhergehenden Ansprüche, ferner umfassend einen Konzentratbehälter (72), der angeordnet ist zur Aufnahme und Zwischenspeicherung von Konzentrat aus der Umkehrosmoseanlage (14).

8. Verfahren zum Betrieb einer Dampfanlage (10), umfassend:
Bereitstellen von Rohwasser an eine Aufbereitungseinheit (12), die behandeltes Zulaufwasser erzeugt;
Bereitstellen des behandelten Zulaufwassers an eine Umkehrosmoseanlage (14), die Permeat und Konzentrat erzeugt;
Bereitstellen des Permeats an einen Dampfkessel (18);
Aufnehmen des heißen Abschlammwassers aus dem Dampfkessel (18) in einem Abschlammbehälter (20); und
**dadurch gekennzeichnet, dass** es ferner umfasst:
Bereitstellen des Konzentrats aus der Umkehrosmoseanlage an den Abschlammbehälter (20), um das heiße Abschlammwasser, das in dem Abschlammbehälter (20) aus dem Dampfkessel (18) aufgenommen wird, zu kühlen.

9. Verfahren nach Anspruch 8, ferner umfassend das Bereitstellen von Konzentrat an die Aufbereitungseinheit (12).

10. Verfahren nach Anspruch 9, wobei die Aufbereitungseinheit (12) eine Enthärtungseinheit (28) aufweist, die mindestens einen Enthärtungsbehälter (30, 32) und einen Soletank (34) aufweist.

11. Verfahren nach Anspruch 10, wobei Konzentrat an den Soletank (34) bereitgestellt wird; und wobei das Verfahren ferner umfasst:
Regenerieren des mindestens einen Enthärtungsbehälters (30, 32) durch Verwendung von Konzentrat aus dem Soletank (34).

12. Verfahren nach Anspruch 10 oder 11, ferner umfassend das Spülen des mindestens einen Enthärtungsbehälters (30, 32) mit Konzentrat.

13. Verfahren nach einem der Ansprüche 8 bis 12, ferner umfassend das Mischen des an den Abschlammbehälter (20) bereitgestellten Konzentrats mit heißem Abschlammwasser, um das Abschlammwasser zu kühlen.

14. Verfahren nach einem der Ansprüche 8-13, ferner umfassend das Zwischenspeichern des Konzentrats in einem Konzentratspeicherbehälter (72) und das nachfolgende Bereitstellen des Konzentrats an die Aufbereitungseinheit (12) und/oder den Abschlammbehälter (20).

15. Verfahren zum Verändern einer bestehenden Dampfanlage, umfassend eine Aufbereitungseinheit (12), die für die Behandlung von Rohwasser angeordnet ist; einen Dampfkessel (18), der zur Dampferzeugung angeordnet ist; einen Abschlammbehälter (20) in Fluidverbindung mit dem Dampfkessel (18), um heißes Abschlammwasser aus dem Dampfkessel (18) aufzunehmen; und eine Umkehrosmoseanlage (14), die über eine Wasserzulaufleitung (48) in Fluidverbindung mit der Aufbereitungseinheit und über eine Permeatleitung (60) mit dem Dampfkessel (18) steht und die einen Konzentratauslass (56) aufweist, wobei das Verfahren **dadurch gekennzeichnet ist, dass** es Folgendes umfasst:
die fluide Verbindung des Konzentratauslasses (56) der Umkehrosmoseanlage (14) über eine Konzentratleitung (76) mit dem Abschlammbehälter, um Konzentrat, das in der Umkehrosmoseanlage erzeugt wird, an den Abschlammbehälter (20) über die verwendete Konzentratleitung (76) der Dampfanlage bereitzustellen, um dadurch das heiße Abschlammwasser, das in dem Abschlammbehälter (20) aus dem Dampfkessel aufgenommen wird, zu kühlen.

## Revendications

1. Centrale à vapeur (10) comprenant
une unité de traitement (12) agencée pour traiter de l'eau brute,
une chaudière (18) agencée pour produire de la vapeur, et
un contenant de purge (20) en communication de fluide avec la chaudière (18) afin de recevoir de l'eau de purge chaude de la chaudière (18) et
une unité d'osmose inverse (14) en communication de fluide avec l'unité de traitement (12) par une conduite d'eau d'arrivée (48) pour recevoir de l'eau d'arrivée traitée de l'unité de traitement (12), et en communication de fluide avec la chaudière par une conduite de perméat (60) pour fournir à la chaudière (18) du perméat produit dans l'unité d'osmose inverse,
**caractérisée en ce que** l'unité d'osmose inverse est en communication de fluide avec le contenant de purge (20) par une conduite de concentré (76) pour fournir du concentré produit dans l'unité d'osmose inverse au contenant de purge (20) par la conduite de concentré (76) et pour refroidir par cela l'eau de purge chaude reçue dans le contenant de purge (20) de la chaudière (18).

2. Centrale à vapeur (10) selon la revendication 1, **caractérisée en ce que** l'unité d'osmose inverse (14) est en communication de fluide avec l'unité de traitement (12) par une conduite de concentré (78, 80, 82) et **en ce que**, en fonctionnement, du concentré est fourni à l'unité de traitement par la conduite de concentré (78, 80, 82).

3. Centrale à vapeur (10) selon la revendication 2, **caractérisée en ce que** l'unité de traitement (12) comprend une unité d'adoucisseur (28) comportant au moins un contenant d'adoucisseur (30, 32) et un réservoir d'eau salée (34).

4. Centrale à vapeur (10) selon la revendication 3, **caractérisée en ce que**, en fonctionnement, du concentré est fourni au réservoir d'eau salée (34) et est utilisé ensuite pour régénérer ledit au moins un contenant d'adoucisseur (30, 32).

5. Centrale à vapeur (10) selon la revendication 3 ou 4, **caractérisée en ce que**, en fonctionnement, du concentré est fourni audit au moins un contenant d'adoucisseur (30, 32) de façon à purger le contenant d'adoucisseur (30, 32).

6. Centrale à vapeur (10) selon l'une quelconque des revendications précédentes, **caractérisée en ce que**, en fonctionnement, du concentré fourni au contenant de purge (20) est mélangé avec de l'eau de purge chaude de façon à refroidir l'eau de purge chaude.

7. Centrale à vapeur (10) selon l'une quelconque des revendications précédentes, comprenant en outre un réservoir de concentré (72) agencé pour recevoir et stocker temporairement du concentré provenant de l'unité d'osmose inverse (14).

8. Procédé de faire fonctionner une centrale à vapeur (10), comprenant
fournir de l'eau brute à une unité de traitement (12) qui produit de l'eau d'arrivée traitée,
fournir l'eau d'arrivée traitée à une unité d'osmose inverse (14) qui produit du perméat et du concentré,
fournir le perméat à une chaudière (18),
recevoir de l'eau de purge chaude de la chaudière (18) dans un contenant de purge (20) et
**caractérisé par** le fait de comprendre en outre
fournir du concentré provenant de l'unité d'osmose inverse au contenant de purge (20) pour refroidir l'eau de purge chaude reçue dans le contenant de purge (20) de la chaudière (18).

9. Procédé selon la revendication 8, comprenant en outre fournir du concentré à l'unité de traitement (12).

10. Procédé selon la revendication 9, **caractérisé en ce que** l'unité de traitement (12) comprend une unité d'adoucisseur (28) comportant au moins un contenant d'adoucisseur (30, 32) et un réservoir d'eau salée (34).

11. Procédé selon la revendication 10, **caractérisé en ce que** du concentré est fourni au réservoir d'eau salée (34) et **en ce que** le procédé comprend en outre
régénérer ledit au moins un contenant d'adoucisseur (30, 32) en utilisant du concentré provenant du réservoir d'eau salée (34).

12. Procédé selon la revendication 10 ou 11, comprenant en outre purger ledit au moins un contenant d'adoucisseur (30, 32) avec du concentré.

13. Procédé selon l'une quelconque des revendications 8 à 12, comprenant en outre mélanger le concentré fourni au contenant de purge (20) avec de l'eau de purge chaude de façon à refroidir l'eau de purge chaude.

14. Procédé selon l'une quelconque des revendications 8 à 13, comprenant en outre stocker le concentré temporairement dans un réservoir de stockage de concentré (72) et fournir le concentré ensuite à l'unité de traitement (12) et/ou au contenant de purge (20).

15. Procédé de modifier une centrale de vapeur existante comprenant une unité de traitement (12) agencée pour traiter de l'eau brute, une chaudière (18) agencée pour produire de la vapeur, un contenant de purge (20) en communication de fluide avec la chaudière (18) afin de recevoir de l'eau de purge chaude de la chaudière (18) et une unité d'osmose inverse (14) en communication de fluide avec l'unité de traitement par une conduite d'eau d'arrivée (48) et la chaudière (18) par une conduite de perméat (60) et ayant une sortie de concentré (56), le procédé étant **caractérisé par** le fait de comprendre
connecter la sortie de concentré (56) de l'unité d'osmose inverse (14) de manière fluidique au contenant de purge par une conduite de concentré (76) pour fournir du concentré produit dans l'unité d'osmose inverse au contenant de purge (20) par la conduite de concentré (76), lorsque la centrale de vapeur est en fonctionnement, pour refroidir par cela l'eau de purge chaude reçue dans le contenant de purge (20) de la chaudière.
